# FASCICULE DE BREVET EUROPEEN

(11) **EP 1 330 317 B1**
(45) Date de publication et mention de la délivrance du brevet: **02.02.2005**
(21) Numéro de dépôt: 00974605.8
(22) Date de dépôt: 30.10.2000
(51) Int. Cl.: B09C 1/02

(54) **PROCEDE ET INSTALLATION DE DEPOLLUTION DES TERRES**
VERFAHREN UND ANLAGE ZUR REINIGUNG VON ERDE
METHOD AND INSTALLATION FOR DEPOLLUTING SOILS

(43) Date de publication de la demande: 30.07.2003
(73) Titulaire: Graffeo, Alphonse, 13620 Carry Le Rouet (FR)
(72) Inventeur: Graffeo, Alphonse, 13620 Carry Le Rouet (FR)
(74) Mandataire: Roman, Michel
(86) Numéro de dépôt international: PCT/FR2000/003024
(87) Numéro de publication internationale: WO 2002/036278

(56) Documents cités:
- DE-A- 4 004 368
- DE-A- 4 140 845
- DE-A- 4 429 862
- DE-A- 19 707 251
- US-A- 5 234 504
- US-A- 5 489 738
- US-A- 5 514 218
- US-A- 5 849 567
- PATENT ABSTRACTS OF JAPAN vol. 2000, no. 09, 13 octobre 2000 (2000-10-13) & JP 2000 167531 A (HITACHI ZOSEN CORP), 20 juin 2000 (2000-06-20)

## Description

La présente invention a pour objet un système de dépollution des terres chargées en hydrocarbures, en métaux lourds et/ou en polychlorobiphényle.

Elle se rapporte à un procédé et à des installations destinées à décontaminer les sols ou les boues.

Aujourd'hui, la dépollution des sols et des boues est devenue un problème crucial dans les pays industrialisés en raison des nuisances croissantes créées par les nombreux rejets nocifs non contrôlés engendrés en particulier par les grandes installations de transformations pétrolières, métallurgiques ou autres. C'est la raison pour laquelle la mise en décharge sans dépollution préalable sera de plus en plus interdite dans le futur.

Le polychlorobiphényle (PCB) est une molécule organochlorée entrant à 60 % dans la composition du pyralène, liquide utilisé comme isolant dans les transformateurs électriques d'ancienne génération. Ce produit, actuellement interdit, est un puissant contaminant chimique qui ne peut être détruit qu'à 1300° C dans des incinérateurs spéciaux, d'où la tentation de s'en débarrasser frauduleusement à moindre coût en le jetant sans le traiter. Signalons qu'il se trouve actuellement en France 36 millions de litres de pyralène à détruire ou à recycler.

Les moyens de dépollution utilisés actuellement nécessitent souvent l'utilisation massive de solvants, en particulier pour la dépollution de sols contaminés par le PCB, ou de longs déplacements des terres à traiter entraînant des coûts de transport très élevés, ce qui fait qu'il existe de nombreux "sites orphelins" qu'on a préféré abandonner, tant la réhabilitation était onéreuse avec les systèmes existants.

Certains systèmes connus prévoient, pour ramollir les terres polluées par les hydrocarbures, l'emploi de solvants de préférence non polaire pendant une durée prolongée, ce qui amène à polluer d'abord pour atteindre un résultat concluant, et en plus une perte de temps non négligeable.

Un procédé de dépolution des terres selon le préambule de la revendication 1 est exposé dans DE-A-4 140 845.

L'invention a pour but de remédier à ces inconvénients, grâce à la mise en place d'un procédé pour décontaminer les sols ou boues reposant sur l'utilisation de solutions activatrices à basse température non destructrices pour les sols en comparaison avec d'autres agents chimiques couramment employés par la profession.

Ce procédé présente l'avantage de pouvoir être utilisé à proximité de sites pollués sans aucune difficulté, car les installations fonctionnent en circuit fermé, les bandes de transport du produit pollué sont capotées, l'eau est recyclée en permanence et réutilisée, le volume de déchets est insignifiant une fois la dépollution faite, et l'écosystème de la terre est préservé.

Le système revendiqué, en raison de son coût d'exploitation réduit, est particulièrement intéressant pour les sites industriels contaminés, et permettra de dépolluer de nombreux "sites orphelins" actuellement abandonnés, ou d'éventuelles plages polluées lors de marée noire.

Le procédé consiste à traiter les boues ou sols pollués en les mélangeant, après broyage, avec un activateur accélérant la dépollutions des terres contenant des hydrocarbures et un porteur micronisé apte à adsorber à basse température les hydrocarbures et le polychlorobiphényle, ledit porteur étant ensuite séparé du mélange et mis en décharge ou régénéré lorsque le sol ne contient que des hydrocarbures, le mélange de terre et d'eau résultant subissant éventuellement un deuxième lavage avec une solution neutre activée se liant aux métaux lourds, et les transportant avec elle lors de ce re-lavage, l'eau de lavage étant ensuite séparée du polluant et restant en circuit fermé.

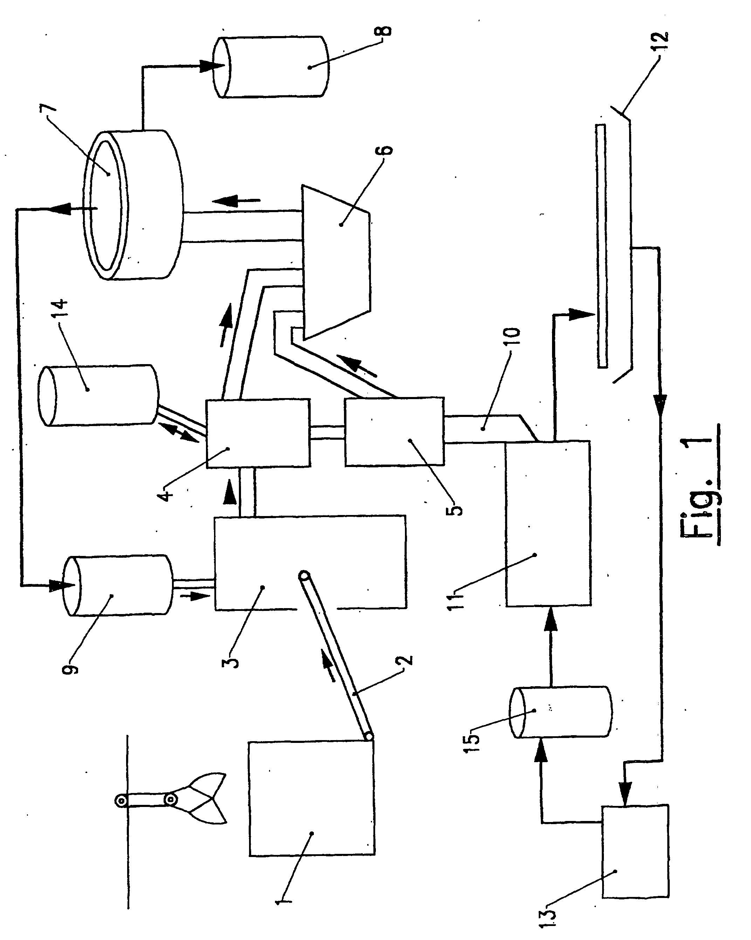

Sur le dessin annexé, donné à titre d'exemple non limitatif d'une des formes de réalisation de l'objet de l'invention, la figure 1 représente un schéma d'une installation permettant d'appliquer le procédé décrit ci-après.

Ce procédé consiste essentiellement à effectuer un transfert des produits polluants de la terre contaminée vers un porteur spécifique.

Le porteur est un adsorbant, constitué par exemple de déchets de l'industrie tels que polymères ou copolymères, micronisés entre 500 et 900 microns, ou de l'extrusion de copolymères haute densité en billes de 3 mm qui sont éclatées par la suite, ce qui permet d'éviter une activation avant leur emploi. Le porteur ainsi obtenu pèse entre 15 et 80 kg par m3.

Grâce à la micronisation ou extrusion, on obtient une surface d'adsorption très importante qui permet, dans le cas de traitement de terres polluées par des hydrocarbures ou par le polychlorobiphényle (PCB), de ne procéder qu'à un seul lavage sans activer le porteur.

Pour procéder à la dépollution des hydrocarbures, le sol à décontaminer, après pré-traitement dans un concasseur - broyeur 1, est acheminé, à l'aide d'un transporteur 2 à bande capotée, dans un mélangeur 3 où il est mis en contact avec le porteur adsorbant. Après ajout par pulvérisation de 5 à 10 % en volume d'un activateur à base d'eau, le tout est brassé énergiquement.

L'activateur permettant d'accélérer la dépollution des sols contenant des hydrocarbures est obtenu en ajoutant successivement à 200 litre d'eau (H²O) :
- 100 centilitres de mono-Propylène-glycol . 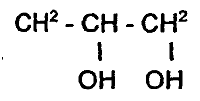
- 70 à 90 centilitres de Glycerol 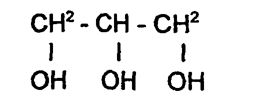
- 30 à 50 centilitres d'éthanol

   CH² - CH² - OH

On obtient une masse homogène qui est déversée dans un bac de séparation 4, puis éventuellement dans un second bac de séparation 5 de façon à obtenir une récupération totale du porteur et des fines particules. On profite du fait que le porteur est hydrophobe et surnage sur l'eau, ce qui permet de séparer la terre du porteur chargé en polluant (transfert de pollution).

Le porteur séparé des terres est envoyé dans un bac de réception 6, d'où il est transféré par pompage vers une centrifugeuse 7 ayant un effet «G» suffisant pour provoquer cette séparation, et dans laquelle il passe par une phase physique de séparation du polluant, ce qui permet de le réutiliser pour de nombreux cycles.

Les hydrocarbures sont dirigés vers un récipient de stockage 8 et le porteur récupéré envoyé dans un doseur 9 alimentant le mélangeur 3. Les hydrocarbures seront soit recyclés en raffinerie, soit utilisés comme adjuvants de combustion, par exemple dans les cimenteries.

Lorsque le porteur est «fatigué», il peut être utilisé en tant que composé pour revêtement de routes, dans les bitumes polymères, à raison de 1 à 2 % environ en poids. Ainsi, les déchets deviennent matière première, rien n'est perdu ou à mettre en décharge.

A titre indicatif, pour une pollution par hydrocarbures de 200 000 à 300 000 ppm, on obtient un résultat final d'environ 500ppm par un premier lavage, ce résultat pouvant être amélioré par un deuxième lavage et avec d'avantage de porteurs.

Les composés organiques volatiles ("COV") sont également pris en compte dans le système car l'installation de chargement est capotée et, après adsorption par le porteur, sont faits prisonniers dans la masse, ce qui représente une innovation importante par rapport à tous les autres systèmes.

La terre traitée sur place peut être remise en place directement, car le procédé permet également le traitement direct des parties dites "fines, ce qui permet de garantir un degré de propreté élevé tout en ayant préservé l'écosystème.

Pour la dépollution successive d'hydrocarbures et de métaux lourds, le sol est repris après passage dans le ou les bacs de séparation 4, 5 par un transporteur 10 qui le déverse dans un malaxeur 11 dans lequel est ajouté une solution écologique activante neutre se liant avec les métaux et permettant de laver les métaux du sol. Cette solution mélangée à l'eau représente environ 15 à 20 % du volume qui se trouve dans le malaxeur 11 de traitement.

La terre est ensuite séparée de l'eau à l'aide d'un séparateur 12 comportant une bande filtrante reliée à un réseau de vide ayant une longueur appropriée. Elle peut alors retourner à son emplacement originel, dépolluée selon les normes en vigueur, et l'eau, régénérée et débarrassée des métaux au moyen d'un système de traitement 13 de type connu. Ces métaux pouvant être recyclés et revalorisés ou dirigés vers une décharge appropriée.

Le procédé permet de débarrasser les sols traités de 95 % des métaux tels que le cadmium, le zinc, le plomb, le cuivre, etc.

Dans le cas de sols pollués par le polychlorobiphényle (PCB) le traitement est identique à celui employé pour les hydrocarbures, à l'exception du porteur qui sera légèrement modifié, celui-ci n'étant pas régénéré mais étant directement envoyé vers une décharge prévue à cet effet ou dans un incinérateur spécial.

Ce procédé évite l'emploi massif de solvants pour la dépollution de sols contaminés par le PCB.

Le procédé de dépollution PCB tel que décrit divise le coût de traitement par 3 et garantit une dépollution de < de 30 mg (kg).

L'installation de la figure 1 est complétée par un réservoir d'eau 14 en circuit fermé relié au bac de séparation 4, ainsi que par un élément de stockage 15 de la solution active de lavage des métaux lourds, cet élément étant relié au malaxeur 11 et alimenté en eau par le système de traitement 13 lié à l'installation.

Le positionnement des divers éléments constitutifs donne à l'objet de l'invention un maximum d'effets utiles qui n'avaient pas été, à ce jour, obtenus par des procédés similaires permettant de traiter de tels taux de pollution à froid.

## Revendications

1. Procédé de dépollution des terres, destinée à décontaminer les sols ou boues chargés en hydrocarbures, en métaux lourds et/ou en polychlorobiphényle (PCB), dans lequel les boues ou sols pollués à traiter sont mélangés, après broyage dans un concasseur-broyeur (1 ), avec un porteur apte à adsorber à basse température les hydrocarbures et le polychlorobiphényle puis à être séparé par décantation des dits sols ou boues pollués,
**caractérisé en ce que**, au mélange de boues ou sols pollués et de porteur, est ajouté par pulvérisation un activateur destiné à accélérer la dépollution des sols contenant des hydrocarbures, et obtenu en ajoutant successivement à 200 litre d'eau (H²O) :
- 100 centilitres de mono-Propylène-glycol , 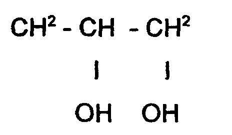
- 70 à 90 centilitres de Glycerol 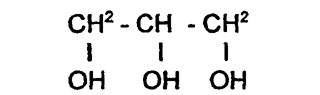
- 30 à 50 centilitres d'éthanol
CH² - CH² - OH

2. Procédé selon la revendication 1, **se caractérisant par le fait que** le porteur est un adsorbant, constitué de polymères ou copolymères extrudé en billes de 3 mm écrasées par la suite, de manière à éviter l'activation dudit porteur avant son emploi.

3. Procédé selon l'une quelconque des revendications précédentes, **se caractérisant par le fait que** les composés organiques volatiles sont pris en compte dans le système de dépollution grâce à une installation de chargement capotée, de façon à ce qu'ils soient adsorbés par le porteur et faits prisonniers dans la masse.

4. Procédé selon l'une quelconque des revendications précédentes, **se caractérisant par le fait que** pour le traitement de sols pollués par des hydrocarbures et éventuellement des métaux lourds, le porteur adsorbant, préalablement séparé des boues ou terres par décantation, est transféré vers une centrifugeuse (7) ayant un effet «G» suffisant dans laquelle il passe par une phase physique de séparation du polluant, de façon à pouvoir le réutiliser pour de nouveaux cycles.

5. Procédé selon l'une quelconque des revendications précédentes **se caractérisant par le fait que** lorsque les sols pollués contiennent des métaux lourds en plus des hydrocarbures, la terre, après séparation du porteur adsorbant, est envoyée vers un malaxeur (11) dans lequel est ajoutée une solution écologique activante neutre se liant avec les métaux et permettant de débarrasser la terre desdits métaux par lavage, cette solution étant mélangée à l'eau et représentant environ 15 à 20 % du volume qui se trouve dans le malaxeur (11) de traitement, la terre étant finalement séparée de l'eau à l'aide d'une bande filtrante reliée à un réseau de vide (12), régénérée et débarrassée des métaux qui pourront éventuellement être revalorisés.

6. Procédé selon l'une quelconque, des revendications 1 à 4, **se caractérisant par le fait que** pour le traitement de sols pollués par du polychlorobiphényle (PCB), le porteur, après séparation avec la terre dépolluée est mis en décharge ou incinéré dans un incinérateur spécial.

7. Installation de dépollution des terres, destinée à décontaminer les sols ou boues chargés en hydrocarbures, en métaux lourds ou en polychlorobiphényle (PCB) en appliquant le procédé selon les revendications précédentes,
**caractérisée en ce qu'**elle comporte :
- un concasseur-broyeur (1) de pré-traitement des terres polluées, relié à l'aide d'un transporteur (2) à bande capotée à un mélangeur (3) où lesdites terres sont mélangées avec un adsorbant et un activateur avant d'être transférées dans
- un ou deux bacs de séparation (4, 5) dans lesquels sont transférées les terres à la sortie du mélangeur (3),
- un bac de réception (6) recevant le porteur séparé des terres,
- une centrifugeuse (7) permettant ensuite de le séparer du polluant,
- un transporteur (10) acheminant les terres vers un malaxeur (11) apte à débarrasser celles-ci des métaux lourds par lavage, au moyen d'une solution aqueuse activante,
- un séparateur (12) comportant une bande filtrante sous vide permettant d'extraire ensuite l'eau des terres, ladite eau étant régénérée et au moyen d' un système de traitement (13) de type connu pour régénérer cette eau et la débarrasser des métaux.

## Claims

1. Process for the depollution of ground, intended to decontaminate soil or sludge charged with hydrocarbons, heavy metals and/or polychlorinated biphenyl (PCB), in which the polluted sludge or soil to be treated is mixed after crushing in a breaker-crusher (1), with a carrier able to adsorb hydrocarbons and polychlorinated biphenyl at low temperature, then separated by decantation of the said polluted soil or sludge,
**characterized in that**, to the mixture of polluted sludge or soil and carrier is added by pulverization an activator in order to accelerate the depollution of the soil containing hydrocarbons, and obtained by successively adding to 200 litres of water (H²O):
- 100 centilitres of mono-propylene-glycol 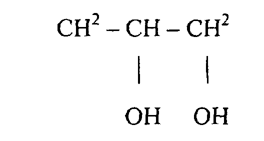
- 70 to 90 centilitres of glycerol 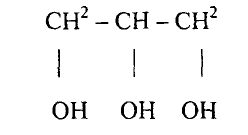
- 30 to 50 centilitres of ethanol
CH² - CH² - OH

2. Process according to claim 1, **characterized in that** the carrier is adsorbent, consisting of polymers or copolymers extruded in balls of 3 mm, then crushed so as to avoid activation of the aforesaid carrier before its use.

3. Process according to any of the aforesaid claims, **characterized in that** the volatile organic compounds are taken into account in the depollution system by the installation of a covered loading system, so that they are adsorbed by the carrier and enclosed in the mass.

4. Process according to any of the aforesaid claims, **characterized in that** the soils polluted by hydrocarbons and possibly heavy metals, the adsorbing carrier, previously separated from the sludge or soil by decantation, is transferred towards a centrifuge machine (7) producing sufficient "g" in which it passes through a physical phase of pollutant separation, in order to be reused on new cycles.

5. Process according to any of the aforesaid claims **characterized in that** when the polluted soils contain heavy metals in addition to hydrocarbons, after separation out of the adsorbing carrier, the earth is dispatched towards a mixer (11) into which is added a neutral activating ecological solution binding with the metals and enabling the metals to be removed from the earth by washing, this solution being mixed with water and accounting for approximately 15 to 20% of the volume in the treatment mixer (11), the earth being finally separated from the water using a filter belt connected to a vacuuming system (12), regenerated and freed of the metals that may then be recycled.

6. Process according to any of claims 1 to 4, **characterized in that** for the treatment of soil polluted by polychlorinated biphenyl (PCB), after separation, the cleansed ground with the carrier is evacuated to a landfill site or incinerated in a special incinerator.

7. Ground depollution installation, intended to decontaminate soil or sludge charged with hydrocarbons, heavy metals or polychlorinated biphenyl (PCB) by applying the process according to the aforesaid claims,
**characterized in that** it comprises:
- a breaker-crusher (1) for preprocessing the polluted ground, connected using a covered belt conveyor (2) to a mixer (3) where the aforementioned ground is mixed with an adsorbent and an activator before being transferred to
- one or two separation tanks (4, 5) into which the earth is transferred at the discharge from the mixer (3),
- a reception tank (6) receiving the carrier separated from the earth,
- a centrifuger (7) then enabling it to be separated from the pollutant,
- a conveyor (10) carrying the earth to a mixer (11) able to remove heavy metals by washing with an activating aqueous solution,
- a separator (12) comprising a vacuum-type filter belt extracting the water from the earth, the aforementioned water being regenerated, and by means of a treatment system (13) of known type in order to regenerate this water and remove the metals from it.

## Patentansprüche

1. Verfahren zur Reinigung des Erdreichs von Schadstoffen, bestimmt zur Dekontaminierung von Böden oder Schlämmen, die mit Kohlenwasserstoffen, Schwermetallen und/oder Polychorobiphenyl (PCB) belastet sind, bei welchem die schadstoffhaltigen Schlämme oder Böden nach dem Mahlen in einem Brech/Mahlwerk (1) mit einem Träger gemischt werden, der Kohlenwasserstoffe und Polychlorobiphenyl bei niedriger Temperatur binden und von den genannten schadstoffhaltigen Schlämmen oder Böden durch Dekantieren getrennt werden kann,
**gekennzeichnet dadurch, dass** der Mischung der schadstoffhaltigen Schlämme oder Böden mit dem Träger durch Sprühen ein Aktivator zugesetzt wird, der die Reinigung der die Kohlenwasserstoffe enthaltenden Böden beschleunigen soll und dadurch erhalten wird, dass 200 Liter Wasser (H₂O) nacheinander folgende Stoffen zugesetzt werden:
- 100 Centiliter Mono-Propylenglykol 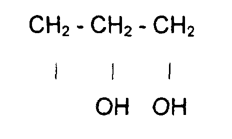
- 70 bis 90 Centiliter Glyzerin 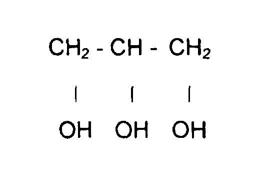
30 bis 50 Centiliter Ethanol
CH₂ - CH - CH₂

2. Verfahren gemäß Anspruch 1, **gekennzeichnet dadurch, dass** der Träger ein aus Polymeren oder Copolymeren bestehendes Adsorbens ist, die in Form von 3 mm dicken Kugeln extrudiert und anschließend gequetscht werden, so dass die Aktivierung des genannten Trägers vor seiner Verwendung verhindert wird.

3. Verfahren gemäß einem der obenstehenden Ansprüche, **gekennzeichnet dadurch, dass** die flüchtigen organischen Bestandteile dank einer überdachten Beschickungsanlage so in das Reinigungssystem eingeleitet werden, dass sie vom Träger adsorbiert und in der Masse eingeschlossen werden.

4. Verfahren gemäß einem der obenstehenden Ansprüche, **gekennzeichnet dadurch, dass** der zur Behandlung der durch Kohlenwasserstoffe und gegebenenfalls durch Schwermetalle belasteten Böden dienende adsorbierende Träger, nachdem er von den Schlämmen oder Böden durch Dekantieren getrennt wurde, in eine Zentrifuge (7) überführt wird, die eine ausreichende Kraft "G" besitzt und in der er eine Phase der physikalischen Trennung des Schadstoffs durchläuft, so dass er für neue Zyklen wieder verwendet werden kann.

5. Verfahren gemäß einem der vorstehenden Ansprüche, **gekennzeichnet dadurch, dass**, wenn die schadstoffbelasteten Böden zusätzlich zu den Kohlenwasserstoffen auch Schwermetalle enthalten, die Erde in einen Mischer (11) geleitet wird, in den eine biologisch aktivierende, neutrale Lösung zugeführt wird, die sich mit den Schwermetallen verbindet, so dass die Erde von den genannten Metallen durch Waschen befreit werden können, wozu diese Lösung mit Wasser vermischt wird und etwa 15 bis 20 % des im Mischer (11) enthaltenen Volumens ausmacht, wonach das Wasser der Erde über ein an eine Vakuumanlage (12) angeschlossenes Filterband entzogen, die Erde regeneriert und von den Schwermetallen befreit wird, die ihrerseits gegebenenfalls zurückgewonnen werden können.

6. Verfahren gemäß einem der Ansprüche 1 bis 4, **gekennzeichnet dadurch, dass** der Träger zur Behandlung von mit Polychlorobiphenyl belasteten Böden nach der Trennung von der gereinigten Erde auf eine Müllkippe entsorgt oder in einer Spezial-Verbrennungsanlage verbrannt wird.

7. Anlage zur Reinigung schadstoffhattiger Erde, bestimmt zur Dekontaminierung von kohlenwasserstoff-, schwermetall- oder polychlorobiphenylhaltigen (PCB-haltigen) Böden oder Schlämmen durch Anwendung eines der obenstehenden Verfahren, **gekennzeichnet dadurch, dass** sie folgende Komponenten besitzt:
- ein Brech-/Mahlwerk (1) zur Vorbehandlung der schadstoffhaltigen Erde, das über ein überdachtes Transportband (2) mit einem Mischer (3) verbunden ist, in dem die genannte Erde mit einem Adsorbens und einem Aktivator gemischt wird, bevor sie in
- ein oder zwei Trennbecken (4, 5) geleitet wird, in welche die Erde nach dem Austritt aus dem Mischer (3) befördert wird,
- einem Auffangbecken (6), in dem der von der Erde getrennte Träger aufgefangen wird,
- einer Zentrifuge (7), in welcher dieser dann von den Schadstoffen getrennt wird,
- einer Transportanlage (10), das die Erde zu einem Mischer (11) befördert, in der sie durch Waschen mit einer aktivierenden, wässerigen Lösung von den Schwermetallen befreit wird.
- einer Trennanlage (12) mit einem an Vakuum angeschlossenen Filterband, auf dem der Erde anschließend das Wasser entzogen wird, wobei das Wasser regeneriert wird, sowie einem
- Behandlungssystem (13) bekannter Art, um dieses Wasser zu regenerieren und von den Metallen zu befreien.
